(19) Europäisches Patentamt
European Patent Office
Office européen des brevets

(11) **EP 2 695 289 B1**

(12) **FASCICULE DE BREVET EUROPEEN**

(45) Date de publication et mention
de la délivrance du brevet:
**30.05.2018 Bulletin 2018/22**

(21) Numéro de dépôt: **12722766.8**

(22) Date de dépôt: **10.04.2012**

(51) Int Cl.:
*H02M 7/5387* ^(2007.01)     *H02M 7/48* ^(2007.01)
*H02P 27/08* ^(2006.01)

(86) Numéro de dépôt international:
**PCT/FR2012/050777**

(87) Numéro de publication internationale:
**WO 2012/136946 (11.10.2012 Gazette 2012/41)**

(54) **PROCÉDÉ DE COMMANDE D'UN ONDULEUR DE TENSION ET DISPOSITIF ASSOCIÉ**

VERFAHREN ZUR STEUERUNG EINES SPANNUNGSUMWANDLERS UND ZUGEHÖRIGE VORRICHTUNG

METHOD FOR CONTROLLING A VOLTAGE INVERTER AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2011 FR 1153100**

(43) Date de publication de la demande:
**12.02.2014 Bulletin 2014/07**

(73) Titulaire: **Valeo Systèmes de Contrôle Moteur 95800 Cergy (FR)**

(72) Inventeur: **DE SOUSA, Luis 95670 Eragny sur Oise (FR)**

(74) Mandataire: **Argyma 36, rue d'Alsace Lorraine 31000 Toulouse (FR)**

(56) Documents cités:
**DE-C1- 4 241 647     US-A- 6 005 783
US-A1- 2006 067 655     US-A1- 2011 011 658**

EP 2 695 289 B1

**Description**

La présente invention concerne le domaine des dispositifs électriques de commande des moteurs électriques et plus particulièrement les onduleurs et leur alimentation.

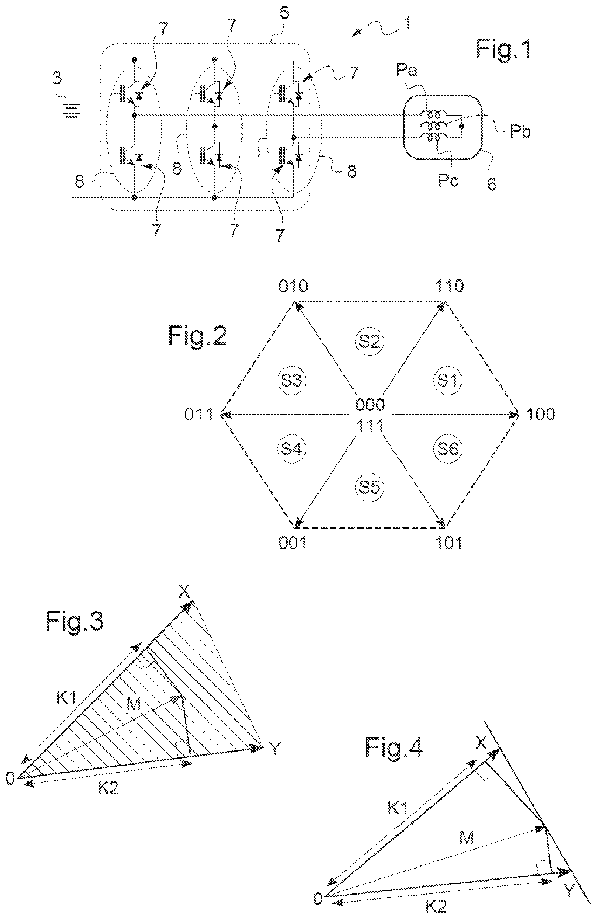

Pour mieux comprendre l'état de la technique, on a représenté sur les figures 1 à 5 un onduleur de l'état de la technique ainsi que des schémas vectoriels correspondants permettant de comprendre son fonctionnement.

Sur la figure 1, on a représenté schématiquement un dispositif électrique 1 dans lequel des batteries rechargeables haute tension 3 délivrent une tension continue à un onduleur de tension 5 qui transforme cette tension continue en une tension alternative. Cette tension alternative est délivrée à un moteur électrique à courant alternatif 6, schématisé ici par ses trois enroulements Pa, Pb, Pc correspondant aux trois phases du moteur 6. Le moteur électrique 6 assurant la mise en mouvement d'un équipement mécanique (non représenté).

L'onduleur de tension 5 comprend typiquement une pluralité d'interrupteurs 7 dont le pilotage des commutations permet de réaliser une modulation en largeur d'impulsions (MLI) et de générer des vecteurs d'espaces comme représenté sur la figure 2 dans le cas du pont triphasé standard représenté sur la figure 1.

Dans le cas présent, l'onduleur de tension 5 comprend trois branches 8 comprenant deux interrupteurs 7 chacune. Les interrupteurs 7 d'une même branche 8 ne pouvant être fermés ou ouverts simultanément, il existe huit combinaisons de commutations différentes. Chaque combinaison correspond à un vecteur d'espace. On obtient ainsi huit vecteurs d'espaces (notés 000, 001, 011, 010, 110, 100, 101, 111) dont deux nuls (000, 111) définissant 6 secteurs notés S1, S2, S3, S4, S5, S6. Un vecteur nul est un vecteur n'entraînant pas la rotation de l'équipement mécanique du moteur 6.

En modulant au moins deux de ces vecteurs on obtient un vecteur résultant $\vec{M}$ comme représenté sur la figure 3 dans le cas où la modulation de vecteurs d'espace est réalisée sur deux vecteurs non nuls et un vecteur nul.

Le vecteur $\vec{M}$ peut être décrit par

$$\vec{M} = k_1 \cdot \vec{X} + k_2 \cdot \vec{Y} + k_3 \cdot \vec{0}$$

$$k_1 + k_2 + k_3 = 1$$

$$0 \leqslant k_{1,2,3} \leqslant 1$$

(avec $k_{1,2,3} = K_{1,2,3}/2$)

Ainsi, la modulation de deux vecteurs non nuls adjacents et d'un vecteur nul de la figure 2 permet d'obtenir un vecteur résultant dans le secteur situé entre les deux vecteurs adjacents.

Afin de limiter le nombre de commutations, la modulation peut se faire sur seulement deux vecteurs adjacents comme représenté sur la figure 4.

Le vecteur $\vec{M}$ est alors décrit par

$$\vec{M} = k_1 \cdot \vec{X} + k_2 \cdot \vec{Y}$$

$$k_1 + k_2 = 1$$

$$0 \leq k_{1,2} \leq 1$$

Dans ce cas, la modulation des interrupteurs d'une seule branche de l'onduleur de tension permet d'obtenir un vecteur résultant dont la longueur est fixée.

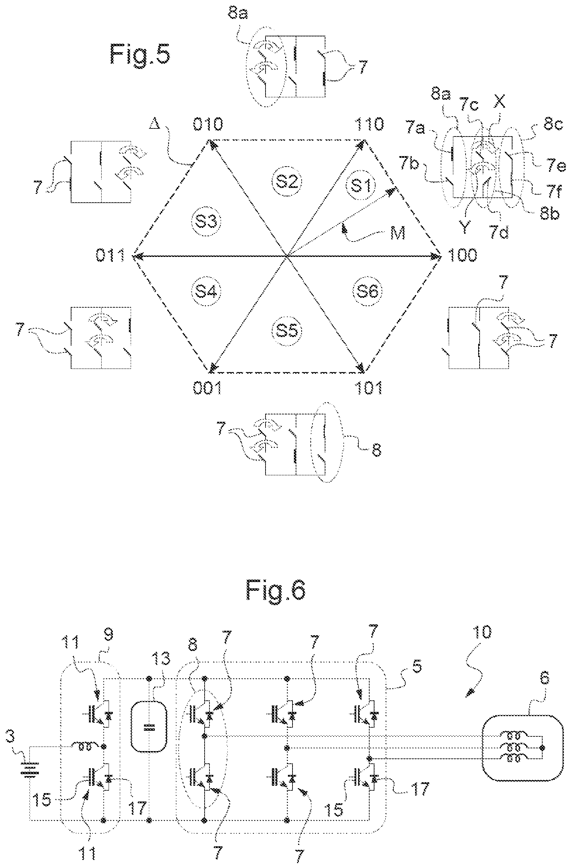

Afin de mieux comprendre cette modulation, la figure 5 reprend le schéma vectoriel de la figure 2 en montrant les différentes positions de commutation des interrupteurs 7 de l'onduleur de tension 5 correspondant à chacun des secteurs définis par les vecteurs d'espaces.

En prenant l'exemple du secteur SI situé entre les vecteurs d'espaces 100 et 110, les commutations des interrupteurs de l'onduleur permettant d'obtenir un vecteur résultant situé dans ce secteur S1, sont une position fermée pour les interrupteurs 7a et 7f, une position ouverte pour les interrupteurs 7b et 7e et des commutations séquentielles (représentées par les flèches X et Y) des interrupteurs 7c et 7d. Ces commutations séquentielles permettent de décrire l'ensemble du secteur S1 depuis le vecteur 100 jusqu'au vecteur 110 en faisant varier la proportion de temps pendant laquelle chacun des interrupteurs est ouvert ou fermé.

Par exemple, pour obtenir un vecteur résultant $\vec{M}$ situé de manière médiane entre le vecteur 100 et le vecteur 110, les commutations séquentielles doivent correspondre à une répartition égale (50% du temps chacune) des deux positions possibles des interrupteurs 7c et 7d de la branche 8b. On obtient ainsi:

$$\vec{M} = k_1 \cdot \vec{x} + k_2 \cdot \vec{y}$$

avec $\vec{x}$ correspondant au vecteur 100 et $\vec{y}$ correspondant au vecteur 110. Le passage d'un secteur à un autre, se fait en changeant la branche de l'onduleur sur laquelle sont appliquées les commutations séquentielles. Par exemple le passage du secteur SI au secteur S2, se fait en passant de la branche 8b à la branche 8a, les positions de commutation des interrupteurs 7c et 7d étant alors respectivement fermé et ouvert. Ainsi, l'application d'une séquence prédéterminée de commutation permet de décrire l'ensemble des secteurs SI à S6 en ne commutant que deux interrupteurs simultanément.

Le nombre de commutations, et par conséquent les pertes liées aux commutations, sont donc réduits par rapport à une modulation intersective dans laquelle au moins deux branches sont commutées.

Cependant, en modulant seulement deux vecteurs d'espace, l'amplitude du vecteur $M$ est fixée. En effet, en considérant le schéma de commutation de la figure 5, au cours du temps, l'extrémité du vecteur résultant décrit l'hexagone $\Delta$ joignant les extrémités des six vecteurs d'espace non nuls. Les forces électromotrices générées par l'onduleur ne sont alors pas sinusoïdales ce qui induit la formation d'harmoniques néfastes au fonctionnement et au rendement du moteur puisque des pertes supplémentaires apparaissent.

Il est donc nécessaire de proposer un procédé et un dispositif permettant de réduire la formation des harmoniques créées par une modulation à largeur d'impulsion au niveau d'un onduleur de tension 5 tout en limitant le nombre de commutations au niveau de l'onduleur de tension 5 afin de limiter les pertes.

Ainsi, les modes de réalisation de la présente invention concernent un procédé de commande d'un dispositif électrique d'entraînement d'un moteur à courant alternatif selon la revendication 1. Les vecteurs d'espace combinés pour générer chaque vecteur de tension sont uniquement des vecteurs non nuls. Ce choix de vecteurs d'espace peut permettre d'économiser des transitions et donc des commutations qui entraînent des pertes. La modulation de l'amplitude de la tension délivrée par le convertisseur de tension continue-continue permet de faire varier l'amplitude du vecteur de tension résultant malgré l'absence d'utilisation de vecteurs d'espace nuls pour générer ce dernier.

Selon un autre aspect, la modulation d'amplitude de la tension délivrée par le convertisseur de tension continue-continue correspond à l'application d'un profil de tension prédéterminé générant un vecteur de tension résultant ayant une amplitude constante au cours du temps.

Selon un aspect supplémentaire, l'onduleur de tension à pont triphasé comprend six interrupteurs répartis sur trois branches dont les différentes positions de commutation génèrent six vecteurs d'espace non nuls dont les phases sont espacées de $\pi/3$ et d'amplitudes égales.

Selon un aspect additionnel, le profil de tension prédéterminé présente des minimums lorsque la phase du vecteur résultant est égale à $k\pi/3$ et des maximums lorsque la phase du vecteur résultant est égale à $(2k+1)\pi/6$ où k est un entier.

Selon un autre aspect, l'onduleur de tension à pont triphasé est un onduleur de tension triphasé à pont en H et comprend douze interrupteurs répartis sur six branches dont les différentes positions de commutation génèrent dix-huit vecteurs non nuls. Dans ce cas également, le profil de tension prédéterminé peut présenter des minimums lorsque la phase du vecteur résultant est égale à $k\pi/3$ et des maximums lorsque la phase du vecteur résultant est égale à $(2k+1)\pi/6$ où k est un entier. Dans ce cas, au cours du temps, l'extrémité du vecteur résultant a le choix entre deux hexagones, chaque hexagone joignant les extrémités des six vecteurs d'espace non nuls et les deux hexagones étant homothétiques d'un rapport 1/2.

Selon un aspect supplémentaire, seuls les interrupteurs appartenant à une même branche de l'onduleur de tension à pont triphasé sont commutés simultanément.

Selon un aspect additionnel, le convertisseur de tension continue-continue est un circuit élévateur.

Selon un autre aspect, les interrupteurs comprennent des transistors bipolaires à grille isolée.

L'invention concerne également un dispositif électrique d'entraînement d'un moteur à courant alternatif selon la revendication 9. Selon un aspect supplémentaire, l'onduleur de tension à pont triphasé comprend six interrupteurs répartis sur trois branches dont les différentes positions de commutation génèrent six vecteurs d'espace non nuls dont les phases sont espacées de $\pi/3$ et d'amplitudes égales.

Selon un autre aspect supplémentaire, l'onduleur de tension à pont triphasé est un onduleur de tension triphasé à pont en H et comprend douze interrupteurs répartis sur six branches dont les différentes positions de commutation génèrent dix-huit vecteurs non nuls. Dans cet exemple les phases du moteur ne sont pas électriquement connectées entre elles, c'est-à-dire qu'aucune phase n'a une borne directement connectée à une borne d'une autre phase, contrairement à ce qui serait le cas si les phases étaient couplées en étoile ou en triangle, par exemple.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:

- la figure 1 représente un schéma d'un onduleur alimenté par une source de tension continue;
- la figure 2 représente un diagramme de Fresnel sur lequel sont représentés les différents vecteurs d'espace obtenus par les différentes commutations des interrupteurs de l'onduleur de la figure 1;
- la figure 3 représente un schéma d'un vecteur obtenu par modulation de deux autres vecteurs et du vecteur nul;
- la figure 4 représente un schéma d'un vecteur obtenu par modulation de deux autres vecteurs;
- la figure 5 représente les commutations intervenant aux passages d'un secteur à un autre sur le diagramme de la figure 2;
- la figure 6 représente un schéma d'un dispositif électrique d'entraînement d'un moteur électrique selon un premier mode de réalisation de la présente invention;

- la figure 7 présente un schéma d'un profil d'amplitude d'un vecteur de tension résultant fourni par l'onduleur et la représentation correspondante dans un diagramme de Fresnel;

- la figure 8 représente un schéma d'un profil de tension d'alimentation d'un onduleur permettant d'obtenir une amplitude constante du vecteur de tension résultant fourni par l'onduleur;

- la figure 9 représente un agrandissement d'une partie du profil de tension d'alimentation de la figure 8 et du vecteur de tension résultant;

- la figure 10 représente un schéma d'un dispositif électrique d'entraînement d'un moteur électrique comprenant un module d'asservissement selon un deuxième mode de réalisation de la présente invention;

- la figure 11 représente un schéma d'un dispositif électrique d'entraînement d'un moteur électrique comprenant un onduleur à pont en H selon un troisième mode de réalisation de la présente invention;

Sur toutes les figures, les éléments identiques portent les mêmes numéros de référence. De plus, pour les références comportant un numéro et une lettre, la lettre suffixe désigne un élément spécifique appartenant à la classe d'objets auquel réfère le numéro. Ainsi la référence 7a désigne un interrupteur 7 spécifique appartenant à la branche a. Les références comportant seulement un numéro s'appliquent à tous les objets de la classe.

Dans la description qui va suivre, on désigne de façon générale:
Le terme « transistor bipolaire à grille isolée» (« insulated gate bipolar transistor (IGBT) » en anglais) correspond à un transistor hybride, regroupant un transistor à effet de champ à grille métal-oxyde (« metal-oxyd semiconductor field effect transistor (MOSFET) » en anglais) en entrée et un transistor bipolaire en sortie.

En se référant à la figure 6, les modes de réalisation de la présente invention concernent un dispositif électrique 10 qui diffère du dispositif électrique 1 de la figure 1 en ce qu'un convertisseur de tension continue-continue (DC-DC) 9 est connecté entre les batteries rechargeables haute tension 3 et l'onduleur de tension 5. Dans l'exemple de la figure 6, ce convertisseur de tension continue-continue 9 est un élévateur comprenant deux interrupteurs 11 et un élément inductif L. Les interrupteurs 11 du convertisseur de tension continue-continue 9 sont généralement formés d'un transistor de type bipolaire à grille isolée (IGBT) 15 monté en parallèle avec une diode 17. Il est à noter que d'autres types de convertisseurs de tension continue-continue, comme par exemple un abaisseur ou un élévateur-abaisseur, peuvent être utilisés dans le cadre de la présente invention. D'autre part, un élément capacitif 13 est généralement utilisé et placé entre le convertisseur de tension 9 et l'onduleur de tension 5 afin de permettre l'adaptation des deux circuits électriques.

Comme décrit précédemment, un onduleur de tension 5 comprend une pluralité d'interrupteurs 7 destinés à convertir une tension continue en tension alternative.

Les interrupteurs 7 de l'onduleur de tension 5 sont généralement formés d'un transistor de type bipolaire à grille isolée (IGBT) 15 monté en parallèle avec une diode 17.

Une modulation de largeur d'impulsions (MLI) pilote l'état des commutations des interrupteurs 7 de l'onduleur de tension 5 de manière à convertir la tension continue fournie par une source d'alimentation, généralement des batteries 3, en un signal de forme prédéterminée, en général une tension alternative. Le signal permet par exemple d'entraîner en rotation le moteur électrique 6.

Les différentes positions de commutation des interrupteurs 7 de l'onduleur de tension 5 génèrent un ensemble de vecteurs d'espace. Chaque vecteur d'espace correspond à une configuration des tensions fournies par l'onduleur.

Selon un premier mode de réalisation, les interrupteurs 7 sont au nombre de six répartis sur trois branches 8. Dans le présent cas, six vecteurs d'espace non nuls (001, 101, 100, 110, 010, 011) dont les phases sont espacées de $\pi/3$ et d'amplitudes égales sont générés comme représenté sur la figure 5. La combinaison produit un vecteur de tension résultant comme décrit précédemment.

L'application d'une séquence prédéterminée de commutation des interrupteurs 7 de l'onduleur de tension 5 permet d'obtenir un vecteur résultant dont la phase varie de manière continue au cours du temps (c'est-à-dire que le vecteur résultant $\vec{M}$ décrit successivement l'ensemble des secteurs SI à S6).

Le convertisseur de tension continue-continue 9 permet de piloter l'amplitude de la tension fournie par l'onduleur de tension 5.

L'amplitude du vecteur de tension fourni par l'onduleur de tension 5 au moteur électrique 6 est dépendante de l'amplitude de la tension d'alimentation de l'onduleur de tension 5. En modulant l'amplitude de la tension fournie par le convertisseur de tension continue-continue 9 à l'entrée de l'onduleur 5, l'amplitude de la tension fournie au moteur électrique 6 peut être ajustée. La modulation, ou réglage, de la tension du convertisseur peut être fait de manière conventionnelle avec un asservissement qui lit la tension fournie par le convertisseur et la compare par rapport à la valeur désirée. L'écart est amplifié par un correcteur du type P, PI ou PID qui va ajuster le rapport cyclique du convertisseur 9.

La modulation d'amplitude du vecteur de tension résultant est réalisée à des tensions plus ou moins élevées suivant la bande passante du convertisseur de tension continue-continue. Par exemple, la fréquence est inférieure ou égale à 1 kHz, voire inférieure ou égale à 6 kHz.

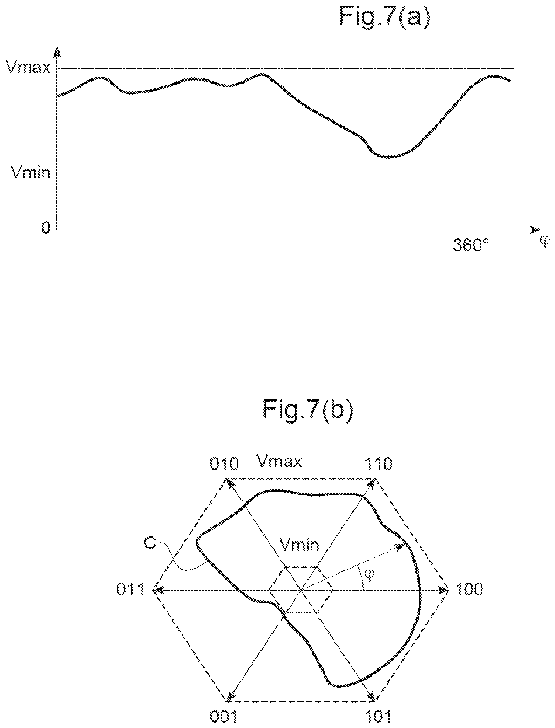

L'amplitude du vecteur de tension résultant est donc contrôlée par la modulation de l'amplitude de la tension délivrée par le convertisseur de tension continue-continue 9 comme décrit sur la figure 7.

La partie (a) de la figure 7 représente un exemple d'évolution de l'amplitude de la tension délivrée par le convertisseur de tension continue-continue 9 comprise entre les valeurs Vmin et Vmax que peut délivrer le convertisseur de tension continue-continue 9 en fonction de la phase φ du vecteur résultant. L'amplitude du vecteur résultant obtenu par une telle modulation de la tension de sortie du convertisseur de tension continue-continue 9 est représentée sur la partie (b) de la figure 7 par le contour C. Cette partie (b) reprend le schéma vectoriel des figures 2 et 5 et les deux hexagones correspondent aux contours obtenus en fixant la tension de sortie du convertisseur de tension continue-continue à Vmin ou à Vmax.

Ainsi, l'amplitude du vecteur résultant est ajustée sans avoir recours à l'utilisation des vecteurs nuls dans la modulation de largeur d'impulsions, ce qui permet de réduire le nombre de commutations et de commuter simultanément seulement deux interrupteurs 7 appartenant à une même branche 8 de l'onduleur de tension 5 comme décrit précédemment. De plus, le fait d'ajuster la tension fournie à l'onduleur permet de réduire les pertes au niveau de l'onduleur lorsque la tension est réduite.

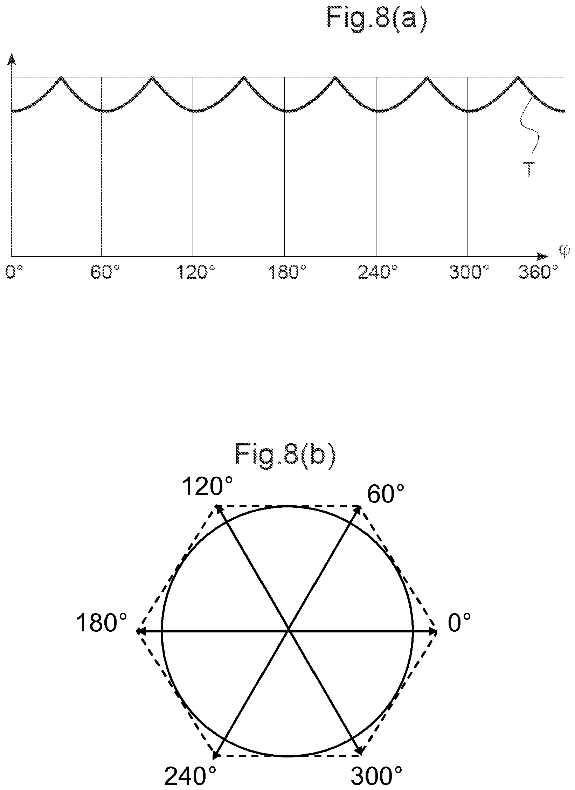

De plus, l'application d'un motif de tension prédéterminé permet de produire un vecteur résultant ayant une amplitude constante au cours du temps, c'est-à-dire décrivant un cercle, comme par exemple le cercle inscrit dans l'hexagone formé par les vecteurs d'espace non nuls comme décrit sur la figure 8. La partie (a) de la figure 8 représente la forme approximative d'un profil de tension T à appliquer en sortie du convertisseur de tension continue-continue 9 pour obtenir une amplitude constante du vecteur résultant représentée par le cercle de la partie (b) de la figure 8. Ce profil de tension T présente des minimums lorsque la phase du vecteur résultant est égale à $k\pi/3$ et des maximums lorsque la phase du vecteur résultant est égale à $(2k+1)\pi/6$, k étant un entier.

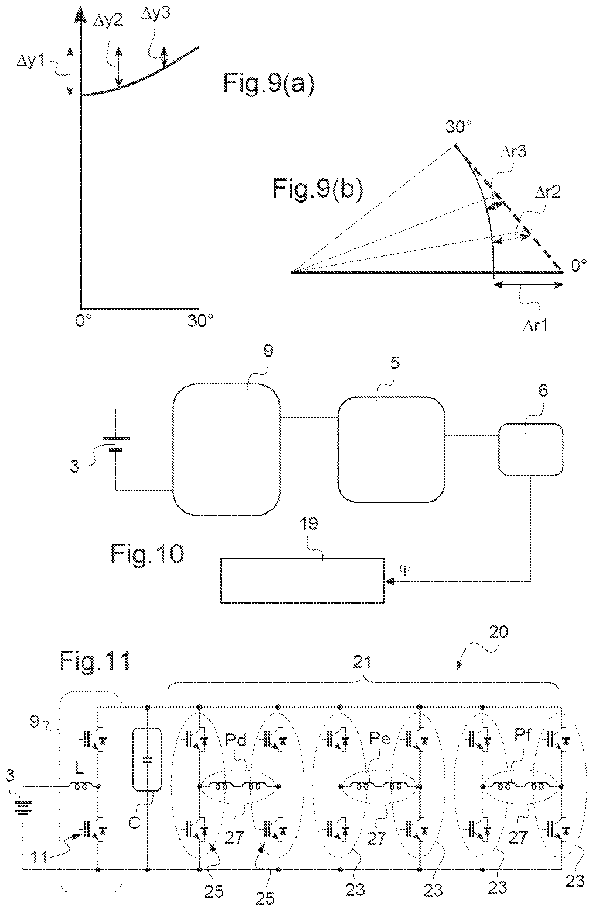

En effet, la variation du profil de tension correspond à l'écart d'amplitude entre un vecteur résultant dont l'extrémité se situe sur l'hexagone et un vecteur résultant dont l'extrémité se situe sur le cercle. Afin de mieux comprendre la détermination du profil de tension T, la figure 9 correspond à un zoom de la figure 8 pour une phase comprise entre 0 et 30°.

Pour une phase de 0°, pour obtenir un vecteur résultant dont l'extrémité se trouve sur le cercle inscrit par rapport à un vecteur résultant se trouvant sur l'hexagone, il faut réduire son amplitude d'une valeur $\Delta r1$, ce qui est obtenu en réduisant l'amplitude de la tension délivrée par le convertisseur de tension continue-continue d'une valeur $\Delta y1$ par rapport à la valeur maximale (correspondant à un angle de 30° puisque lorsque la phase est de 30°, l'hexagone et le cercle inscrit sont confondus). Lorsque la phase est d'environ 10°, l'amplitude du vecteur résultant doit être réduite d'une valeur $\Delta r2$, ce qui

correspond à l'écart de tension $\Delta y2$. De même, à un angle d'environ 20°, l'écart d'amplitude $\Delta r3$ est obtenu par l'écart de tension $\Delta y3$. Ainsi, on peut déterminer le profil de tension à appliquer pour que l'amplitude du vecteur résultant soit constante. L'application de ce profil de tension permet d'obtenir un vecteur résultant d'amplitude constante quelque soit la phase.

Selon un aspect de la présente invention, l'application de ce profil de tension T est réalisée par un asservissement de la tension délivrée par le convertisseur de tension continue-continue 9 en fonction de la phase du vecteur résultant comme représenté sur la figure 10. Un module d'asservissement 19 comprend des moyens de détermination de la phase φ du vecteur résultant produit par l'onduleur de tension 5 et des moyens de commande de la tension fournie par le convertisseur de tension continue-continue 9. Les moyens de détermination de la phase φ du vecteur résultant comprennent des moyens de détermination de la position du rotor par exemple un capteur de position ou un capteur de champ électromagnétique (« ElectroMagnetic Field (EMF) » en anglais).

Ainsi, la tension fournie par le convertisseur de tension continue-continue 9 est asservie en fonction de la phase φ du vecteur résultant et du profil de tension T à appliquer en fonction de la phase φ pour obtenir une amplitude constante.

L'obtention d'un vecteur résultant ayant une amplitude constante permet de réduire l'amplitude des harmoniques, notamment l'harmonique de rang trois et ses multiples et ainsi de réduire les pertes.

Selon un autre mode de réalisation, l'onduleur de tension à pont triphasé est un onduleur de tension triphasé à pont en H 21 et constitue avec les batteries 3, le convertisseur de tension continue-continue 9 et le moteur 6 (ici représenté par les enroulements Pd, Pe, Pf correspondant aux phases du moteur) un dispositif électrique 20 tel que représenté sur la figure 11.

Le terme « structure de pont en H » ou « pont en H » correspond à un circuit électrique ou électronique comportant quatre interrupteurs 25 généralement disposés schématiquement sous forme d'un H. Les deux branches verticales 23 du H comprennent, chacune, deux interrupteurs 25 disposés de part et d'autre de la branche horizontale 27 du H qui correspond à la charge du pont. Dans le cas de la présente invention, cette charge correspond à l'enroulement (ou bobinage) d'une phase d'un moteur électrique 6. Ainsi, pour un moteur électrique triphasé 6, l'onduleur de tension à pont en H 21 comprend douze interrupteurs 25 répartis sur six branches verticales 23.

Les différentes positions de commutation des interrupteurs 25 de l'onduleur de tension à pont en H 21 génèrent dix-huit vecteurs non nuls. De la même manière que précédemment, le convertisseur de tension continue-continue 9 permet d'obtenir, par l'application d'un profil de tension approprié en sortie du convertisseur de tension continue-continue 9, un vecteur résultant avec une amplitude constante tout en limitant le nombre de commutations. Ce profil de tension peut présenter des minimums lorsque la phase du vecteur résultant est égale à $k\pi/3$ et des maximums lorsque la phase du vecteur résultant est égale à $(2k+1)\pi/6$, k étant un entier.

L'utilisation d'un convertisseur de tension continue-continue 9 connecté entre la source d'alimentation continue 3 et l'onduleur de tension 5, 21 permet de contrôler l'amplitude du vecteur de tension résultant produit par l'onduleur de tension 5, 21. L'application, en sortie du convertisseur de tension continue-continue 9, d'un profil de tension approprié permet alors de réduire l'amplitude d'harmoniques non désirées tout en limitant le nombre de commutations ce qui permet d'améliorer le rendement global du dispositif électrique 10, 20 de commande permettant le pilotage d'un moteur électrique 6.

**Revendications**

1. Procédé de commande d'un dispositif électrique (10, 20) d'entraînement d'un moteur à courant alternatif (6), ledit dispositif (10, 20) comprenant :

   - un onduleur de tension à pont triphasé (5, 21) destiné à piloter le moteur électrique à courant alternatif (6) en modulation de largeur d'impulsions, et alimenté par une source de tension continue (3), ledit onduleur de tension (5, 21) ayant une pluralité d'interrupteurs (7, 25) dont les différentes positions de commutation génèrent un ensemble de vecteurs d'espace correspondant à différents états des tensions délivrées par l'onduleur (5, 21) ; et
   - un convertisseur de tension continue-continue (9) connecté entre la source de tension continue (3) et l'onduleur de tension à pont triphasé (5, 21),

   le procédé comprenant une étape de commande des commutations des interrupteurs (7, 25) selon une séquence générant un vecteur de tension résultant à partir d'une combinaison de vecteurs d'espace non nuls, la phase du vecteur de tension résultant variant de manière continue au cours du temps, le procédé comprend en outre une étape de modulation de l'amplitude dudit vecteur de tension résultant par une modulation d'amplitude de la tension délivrée par le convertisseur de tension continue-continue (9), ladite modulation d'amplitude de la tension délivrée par le convertisseur de tension continue-continue correspondant à l'application d'un profil de tension prédéterminé générant un vecteur de tension résultant ayant une amplitude constante au cours du temps.

2. Procédé de commande selon la revendication 1 **caractérisé en ce que** l'onduleur de tension à pont triphasé (5) comprend six interrupteurs (7) répartis sur trois branches (8) dont les différentes positions de commutation génèrent six vecteurs d'espace non nuls dont les phases sont espacées de $\pi/3$ et d'amplitudes égales.

3. Procédé de commande selon la revendication 2 **caractérisé en ce que** le profil de tension prédéterminé présente des minimums lorsque la phase du vecteur résultant est égale à $k\pi/3$ et des maximums lorsque la phase du vecteur résultant est égale à $(2k+1)\pi/6$ où k est un entier.

4. Procédé de commande selon la revendication 1 **caractérisé en ce que** l'onduleur de tension à pont triphasé est un onduleur de tension triphasé à pont en H (21) et comprend douze interrupteurs (25) répartis sur six branches (23) dont les différentes positions de commutation génèrent dix-huit vecteurs non nuls.

5. Procédé de commande selon la revendication 4, **caractérisé en ce que** le profil de tension prédéterminé présente des minimums lorsque la phase du vecteur résultant est égale à $k\pi/3$ et des maximums lorsque la phase du vecteur résultant est égale à $(2k+1)\pi/6$ où k est un entier.

6. Procédé de commande selon l'une des revendications précédentes **caractérisé en ce que** seuls les interrupteurs (7, 25) appartenant à une même branche de l'onduleur de tension à pont triphasé (5, 21) sont commutés simultanément.

7. Procédé de commande selon l'une des revendications précédentes **caractérisé en ce que** le convertisseur de tension continue-continue (9) est un circuit élévateur.

8. Procédé de commande selon l'une des revendications précédentes **caractérisé en ce que** les interrupteurs (7, 25) comprennent des transistors bipolaires à grille isolée (15).

9. Dispositif électrique (10, 20) d'entraînement d'un moteur à courant alternatif (6) comprenant :

   - un onduleur de tension à pont triphasé (5, 21) destiné à piloter le moteur électrique à courant alternatif (6) en modulation de largeur d'impulsions, et alimenté par une source de tension continue (3), le dit onduleur de tension à pont triphasé (5, 21) ayant une pluralité d'interrupteurs (7, 25) dont les différentes positions de commutation génèrent un ensemble de vecteurs d'espace correspondant à différents états des tensions délivrées par l'onduleur (5, 21) ;
   - un convertisseur de tension continue-continue

(9) connecté entre la source de tension continue (3) et l'onduleur de tension à pont triphasé (5, 21) ; et

- des moyens de commande de la commutation desdits interrupteurs (7, 25) selon une séquence générant un vecteur de tension résultant à partir d'une combinaison de vecteurs d'espace non nuls, la phase du vecteur de tension résultant variant de manière continue au cours du temps ; ledit dispositif (10, 20) comprenant des moyens de modulation de l'amplitude du vecteur de tension résultant par une modulation d'amplitude de la tension délivrée par le convertisseur de tension continue-continue (9), ladite modulation d'amplitude de la tension délivrée par le convertisseur de tension continue-continue correspondant à l'application d'un profil de tension prédéterminé générant un vecteur de tension résultant ayant une amplitude constante au cours du temps.

**10.** Dispositif électrique (10) selon la revendication 9 **caractérisé en ce que** l'onduleur de tension à pont triphasé (5, 21) comprend six interrupteurs (7) répartis sur trois branches (8) dont les différentes positions de commutation génèrent six vecteurs d'espace non nuls dont les phases sont espacées de $\pi/3$ et d'amplitudes égales.

**11.** Dispositif électrique (20) selon la revendication 9 **caractérisé en ce que** l'onduleur de tension à pont triphasé est un onduleur de tension triphasé à pont en H (21) et comprend douze interrupteurs (25) répartis sur six branches (23) dont les différentes positions de commutation génèrent dix-huit vecteurs non nuls.

**Patentansprüche**

**1.** Steuerungsverfahren einer elektrischen Vorrichtung (10, 20) zum Antrieb eines Wechselstrommotors (6), wobei die Vorrichtung (10, 20) umfasst:

- einen Spannungswechselrichter mit Dreiphasenbrücke (5, 21), der zur Steuerung des Wechselstrommotors (6) mit Impulsbreitenmodulation bestimmt ist, und gespeist von einer Gleichspannungsquelle (3), wobei der Spannungswechselrichter (5, 21) eine Vielzahl an Schaltern (7, 25) aufweist deren verschiedene Umschaltpositionen eine Gesamtheit an Raumvektoren bilden, die den vom Wechselrichter (5, 21) gelieferten verschiedenen Spannungszuständen entsprechen; und
- einen zwischen der Gleichspannungsquelle (3) und dem Spannungswechselrichter mit Dreiphasenbrücke (5, 21) angeschlossenen Gleichspannungswandler (9),

wobei das Verfahren eine Steueretappe der Umschaltungen der Schalter (7, 25) gemäß einer Sequenz umfasst, wodurch ein Spannungsvektor erzeugt wird, der aus einer Kombination von Raumvektoren entsteht, die nicht null sind, wobei die Phase des resultierenden Spannungsvektors im Laufe der Zeit stetig variiert,
das Verfahren weiter eine Modulationsetappe der Amplitude des resultierenden Spannungsvektors durch eine Modulation der Amplitude der vom Gleichspannungswandler (9) gelieferten Spannung umfasst, wobei die Amplitudenmodulation der vom Gleichspannungswandler gelieferten Spannung der Applikation eines vorbestimmten Spannungsprofils entspricht, das einen resultierenden Spannungsvektor erzeugt, der im Laufe der Zeit eine konstante Amplitude aufweist.

**2.** Steuerungsverfahren nach Anspruch 1, **dadurch gekennzeichnet, dass** der Spannungswechselrichter mit Dreiphasenbrücke (5) sechs Schalter (7) auf drei Abzweigungen (8) verteilt umfasst, deren verschiedene Umschaltpositionen sechs Raumvektoren erzeugen, die nicht null sind, deren Phasen um $\pi/3$ beabstandet sind und mit gleichen Amplituden.

**3.** Steuerungsverfahren nach Anspruch 2, **dadurch gekennzeichnet, dass** das vorbestimmte Spannungsprofil Minima präsentiert, wenn die Phase des resultierenden Vektors $k\pi/3$ entspricht und Maxima, wenn die Phase des resultierenden Vektors $(2k+1)\pi/6$ entspricht, wobei k eine ganze Zahl ist.

**4.** Steuerungsverfahren nach Anspruch 1, **dadurch gekennzeichnet, dass** der Spannungswechselrichter mit Dreiphasenbrücke ein Dreiphasen-Spannungswechselrichter mit H-Brückenschaltung (21) ist und zwölf Schalter (25) auf sechs Abzweigungen (23) verteilt umfasst, deren verschiedene Umschaltpositionen achtzehn Vektoren erzeugen, die nicht null sind.

**5.** Steuerungsverfahren nach Anspruch 4, **dadurch gekennzeichnet, dass** das vorbestimmte Spannungsprofil Minima präsentiert, wenn die Phase des resultierenden Vektors $k\pi/3$ entspricht und Maxima, wenn die Phase des resultierenden Vektors $(2k+1)\pi/6$ entspricht, wobei k eine ganze Zahl ist.

**6.** Steuerungsverfahren nach einem der vorstehenden Ansprüche, **dadurch gekennzeichnet, dass** nur die zu ein- und derselben Abzweigung des Spannungswechselrichters mit Dreiphasenbrücke (5, 21) gehörenden Schalter (7, 25) gleichzeitig umgeschaltet werden.

7. Steuerungsverfahren nach einem der vorstehenden Ansprüche, **dadurch gekennzeichnet, dass** der Gleichspannungswandler (9) eine Erhöhungsschaltung ist.

8. Steuerungsverfahren nach einem der vorstehenden Ansprüche, **dadurch gekennzeichnet, dass** die Schalter (7, 25) zweipolige Transistoren mit isoliertem Gitter (15) umfassen.

9. Elektrische Vorrichtung (10, 20) zum Antrieb eines Wechselstrommotors (6), umfassend:

   - einen Spannungswechselrichter mit Dreiphasenbrücke (5, 21), der zur Steuerung des Wechselstrommotors (6) mit Impulsbreitenmodulation bestimmt ist, und gespeist von einer Gleichspannungsquelle (3), wobei der Spannungswechselrichter mit Dreiphasenbrücke (5, 21) eine Vielzahl an Schaltern (7, 25) aufweist deren verschiedene Umschaltpositionen eine Gesamtheit an Raumvektoren bilden, die den vom Wechselrichter (5, 21) gelieferten verschiedenen Spannungszuständen entsprechen;
   - einen zwischen der Gleichspannungsquelle (3) und dem Spannungswechselrichter mit Dreiphasenbrücke (5, 21) angeschlossenen Gleichspannungswandler (9); und
   - Steuerungsmittel zum Umschalten der Schalter (7, 25) gemäß einer Sequenz wodurch ein Spannungsvektor erzeugt wird, der aus einer Kombination von Raumvektoren entsteht, die nicht null sind, wobei die Phase des resultierenden Spannungsvektors im Laufe der Zeit stetig variiert,

   die Vorrichtung (10, 20) Mittel zur Modulation der Amplitude des resultierenden Spannungsvektors durch eine Modulation der Amplitude der vom Gleichspannungswandler (9) gelieferten Spannung umfasst, wobei die Amplitudenmodulation der vom Gleichspannungswandler gelieferten Spannung der Applikation eines vorbestimmten Spannungsprofils entspricht, das einen resultierenden Spannungsvektor erzeugt, der im Laufe der Zeit eine konstante Amplitude aufweist.

10. Elektrische Vorrichtung (10) nach Anspruch 9, **dadurch gekennzeichnet, dass** der Spannungswechselrichter mit Dreiphasenbrücke (5, 21) sechs Schalter (7) auf drei Abzweigungen (8) verteilt umfasst, deren verschiedene Umschaltpositionen sechs Raumvektoren erzeugen, die nicht null sind, deren Phasen um $\pi/3$ beabstandet sind und mit gleichen Amplituden.

11. Elektrische Vorrichtung (20) nach Anspruch 9, **dadurch gekennzeichnet, dass** der Spannungswechselrichter mit Dreiphasenbrücke ein Dreiphasen-Spannungswechselrichter mit H-Brückenschaltung (21) ist und zwölf Schalter (25) auf sechs Abzweigungen (23) verteilt umfasst, deren verschiedene Umschaltpositionen achtzehn Vektoren erzeugen, die nicht null sind.

**Claims**

1. Method for controlling an electrical device (10, 20) for driving an alternating-current motor (6), said device (10, 20) comprising:

   - a voltage inverter with three-phase bridge (5, 21) configured for controlling the alternating-current electric motor (6) by pulse-width modulation, and powered by a direct-current source (3), said voltage inverter (5, 21) having a plurality of switches (7, 25) of which the various switching positions generate a set of space vectors corresponding to the various voltage states output by the inverter (5, 21); and
   - a DC-DC voltage converter (9) connected between the DC voltage source (3) and the voltage inverter with three-phase bridge (5, 21),

   the method comprising a step of controlling the switching of the switches (7, 25) according to a sequence generating a resulting voltage vector from a combination of non-zero space vectors, the phase of the resulting voltage vector varying continuously over time,
   the method further comprises a step of modulating the amplitude of said resulting voltage vector by modulating the amplitude of the voltage output by the DC-DC voltage converter (9), said amplitude modulation of the voltage output by the DC-DC voltage converter corresponding to the application of a predetermined voltage profile generating a resulting voltage vector having a constant amplitude over time.

2. Method for controlling according to claim 1 **characterised in that** the voltage inverter with three-phase bridge (5) comprises six switches (7) distributed over three branches (8) of which the various switching positions generate six non-zero space vectors of which the phases are spaced by $\pi/3$ and of equal amplitudes.

3. Method for controlling according to claim 2 **characterised in that** the predetermined voltage profile has minimums when the phase of the resulting vector is equal to $k\pi/3$ and maximums when the phase of the resulting vector is equal to $(2k+1)\pi/6$ where k is an integer.

**4.** Method for controlling according to claim 1 **characterised in that** the voltage inverter with three-phase bridge is a three-phase H-bridge voltage inverter (21) and comprises twelve switches (25) distributed over six branches (23) of which the various switching positions generate eighteen non-zero vectors.

**5.** Method for controlling according to claim 4, **characterised in that** the predetermined voltage profile has minimums when the phase of the resulting vector is equal to $k\pi/3$ and maximums when the phase of the resulting vector is equal to $(2k+1)\pi/6$ where $k$ is an integer.

**6.** Method for controlling according to one of the preceding claims **characterised in that** only the switches (7, 25) that belong to the same branch of the voltage inverter with three-phase bridge (5, 21) are switched simultaneously.

**7.** Method for controlling according to one of the preceding claims **characterised in that** the DC-DC voltage converter (9) is a booster circuit.

**8.** Method for controlling according to one of the preceding claims **characterised in that** the switches (7, 25) comprise insulated gate bipolar transistors (15).

**9.** Electrical device (10, 20) for driving an alternating-current motor (6) comprising:

- a voltage inverter with three-phase bridge (5, 21) configured for controlling the alternating-current electric motor (6) by pulse-width modulation, and powered by a direct-current source (3), said voltage inverter with three-phase bridge (5, 21) having a plurality of switches (7, 25) of which the various switching positions generate a set of space vectors corresponding to the various voltage states output by the inverter (5, 21);
- a DC-DC voltage converter (9) connected between the DC voltage source (3) and the voltage inverter with three-phase bridge (5, 21); and
- means for controlling the switching of said switches (7, 25) according to a sequence generating a resulting voltage vector from a combination of non-zero space vectors, the phase of the resulting voltage vector varying continuously over time; said device (10, 20) comprising means for modulating the amplitude of the resulting voltage vector by modulating the amplitude of the voltage output by the DC-DC voltage converter (9), said amplitude modulation of the voltage output by the DC-DC voltage converter corresponding to the application of a predetermined voltage profile generating a resulting voltage vector having a constant amplitude over time.

**10.** Electrical device (10) according to claim 9 **characterised in that** the voltage inverter with three-phase bridge (5, 21) comprises six switches (7) distributed over three branches (8) of which the various switching positions generate six non-zero space vectors of which the phases are spaced by $\pi/3$ and of equal amplitudes.

**11.** Electrical device (20) according to claim 9 **characterised in that** the voltage inverter with three-phase bridge is a three-phase H-bridge voltage inverter (21) and comprises twelve switches (25) distributed over six branches (23) of which the various switching positions generate eighteen non-zero vectors.

Fig.1

Fig.2

Fig.3

Fig.4

## Fig.5

## Fig.6

## Fig.7(a)

## Fig.7(b)

## Fig.8(a)

## Fig.8(b)

Fig.9(a)

Fig.9(b)

Fig.10

Fig.11